# EUROPEAN PATENT SPECIFICATION

(11) **EP 3 104 714 B1**
(45) Date of publication and mention of the grant of the patent: **23.10.2019**
(21) Application number: 15716189.4
(22) Date of filing: 12.02.2015
(51) Int. Cl.: A23G 9/52, A23G 9/46, A23G 9/38

(54) **METHOD TO PRODUCE AN ICE CREAM AND FROZEN DAIRY AND NON-DAIRY DESSERT DRY MIX WITH ENHANCED SOLUBILITY AND HYDRATION PROPERTIES**
VERFAHREN ZUR HERSTELLUNG VON MODULAREM, LEICHT PERSONALISIERBAREM, LEICHT MIT LUFT DURCHSETZBAREM SPEISEEIS OHNE SPEISEEISMASCHINE SOWIE TROCKENMISCHUNG FÜR GEFRORENES MILCHHALTIGES UND NICHT MILCHHALTIGES DESSERT MIT VERBESSERTEN LÖSLICHKEITS- UND HYDRATISIERUNGSEIGENSCHAFTEN
PROCÉDÉ DE PRODUCTION DE MÉLANGE SEC MODULAIRE, FACILEMENT PERSONNALISABLE, FACILE À AÉRER, SANS MACHINE À CRÈME GLACÉE, DE CRÈME GLACÉE ET DE DESSERT NON-LAITIER AYANT DES PROPRIÉTÉS AMÉLIORÉES DE SOLUBILITÉ ET D'HYDRATATION

(30) Priority: 13.02.2014 TH 1401000779
(43) Date of publication of application: 21.12.2016
(73) Proprietor: Tangent Foods International Limited, Camana Bay, Grand Cayman KY1-9007 (KY)
(72) Inventor: JAREER MANSOUR, Abu-Ali, Muang Pitsanulok 65000 (TH)
(74) Representative: Bringer, Mathieu
(86) International application number: PCT/TH2015/000008
(87) International publication number: WO 2015/122857

(56) References cited:
- CN-A- 101 406 237
- CN-A- 102 669 400
- US-A- 5 456 932
- SOUCI ET AL: "food composition and nutrition tables, passages", 2000, FOOD COMPOSITION AND NUTRITION TABLES = DIE ZUSAMMENSETZUNG DER LEBENSMITTEL, NÄHRWERT-TABELLEN = LA COMPOSITION DES ALIMENTS, TABLEAUX DES VALEURS NUTRITIVES, MEDPHARM SCIENTIFIC PUBLISHERS, STUTTGART, GERMANY, PAGE(S) 1 - 55,58, XP002488783, ISBN: 978-3-88763-076-8 page 37 - page 40
- David Kennedy ET AL: "Leaf concentrate: a field guide for small scale programs" In: "Leaf concentrate: a field guide for small scale programs", 1 January 1993 (1993-01-01), XP055533020,

## Description

### FIELD OF THE INVENTION:

This invention relates to methods for making dairy and non-dairy dessert products, home use powder ice cream

### BACKGROUND:

Ice cream and related frozen dairy and non-dairy desserts are a major food industry with estimated annual sales approaching 66 billion USD annually. Ice cream is thought to have originated in the time of the ancient romans. There have been recorded histories of Emperor Nero ordering ice to be brought down from the mountains and then mixed with fruits or honey and consumed as a refreshing dessert. Modern ice cream and similar frozen desserts are reported to have first originated in Arabia, where Arab craftsmen would mix cream with sugar, yogurt and rose water then chill the resulting mix by adding it to ice.

The Chinese are credited with inventing the first systematic methods to produce ice cream where they would add the ingredients into metal pots and place the pots in a mixture of ice and salt which depresses the freezing point of the ice and causes the sweetened mixture inside to freeze more solid.

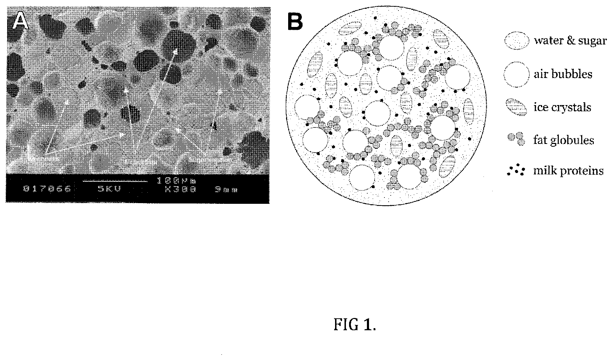

The first patent for the modern mechanized system for making ice cream was granted to Nancy Johnson of Philadelphia in 1843. Mrs. Johnson's hand-cranked machine utilized the same general principles being used today for home and commercial ice cream manufacturing. Chemically, ice cream and similar frozen dairy and non-dairy desserts comprise a foam, a solution and a colloidal suspension. When using natural fluids such as milk and cream to prepare the dessert, the colloidal suspension and most of the solution are already existing. To these, further dry ingredients such as sweeteners, stabilizers and flavors can be added. To create the foam portion, the mix is agitated "beaten" while simultaneously being cooled to increase its viscosity in an effort to entrap air. The entrapment of air, measured by a term called overrun, is important to the quality of the ice cream as it contributes lightness, firmness and gives body to the ice cream. During the beating process, the air bubbles being forced into the mixture begin to get coated with some of the fat and protein found in the mixture which helps stabilize them and create the rough foam that sets the backbone of the aerated dessert structure. FIG 1. provides a microscopic view and diagram illustrating the different substances, air bubbles and fat globules in an ice cream.

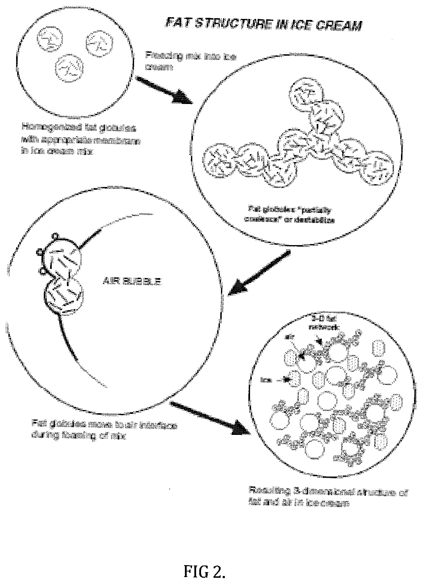

The fat globules and protein molecules align themselves on the air / solution interface. It is the protein network that creates the ultimate foam structure by acting as a surfactant that holds the air bubbles and attaches them to the water. The size and distribution of these fat globules determines how well they coat the air bubbles and ultimately how stable the foam comprising the finished dessert is during processing, freezing a distribution. This is partially, the other reasons being mouth feel and separation resistance, why traditional ice cream and frozen dessert mixtures require homogenization which breaks up the large fat globules into smaller fat globules that can better fit around the air bubbles, interact with the proteins and help stabilize the foam. FIG 2. shows such fat structure in ice cream.

In Modern ice cream making, the ingredients are added as a solution to a refrigerated drum with a central mixing/scraping shaft, as the mixing shaft rotates the solution begins to freeze due to contact with the internal walls of the freezing drum. As the solution rotates and freezes and is scrapped, the mixing shaft beats air into the solution, simultaneously lightening and stiffening the mixture into the texture and mouth feel associated with frozen dairy desserts like ice cream. This process has been virtually unchanged since the time of its inception in the 19th century. While small modifications to the machines such adding pressure and improved freezing and pumping capabilities have been made in addition to improvements in ingredients and stabilizers, the central principle behind ice cream making has remained the same.

The purpose of the rotating shaft and or air incorporation devices is to force air into the mix which, with the help of emulsifiers, disrupts the complete coalescence of the fat portion of the solution (that has undergone particle size reduction during homogenization) and helps arrange it into partially coalesced chains that form structures that entrap air (or aeration gas) thus increasing the volume of the mix and simultaneously lightening its texture upon freezing and firming up the resulting structure and increasing its resistance to melting

By their nature, modern ice cream making systems are energy intensive and cumbersome, necessitating large amounts of energy to handle and prepare the ingredients and then more energy in the ice cream machines as these machines try to rapidly and controllably freeze the solution while aerating it before the fat can fully coalesce. Because of this nature and the need to store and prep the ingredients in steps such homogenization, ice cream factories usually will occupy large physical footprints and require significant capital investment which in turn limits entry into the market and inhibits innovation.

The energy consumption associated with ice cream, and related frozen dairy desserts, comes with a heavy environmental impact in terms of pollution. The need to maintain the product in frozen condition throughout its distribution and sales cycle and the use of often non-recyclable containers further adds to environmental impact.

Currently, powdered food mixes in general and ice cream/frozen dessert mixes for home machines in particular, are generally made by one of two main methods:
1) Drying of liquid mixes: in this method, the desired ingredients are made into a liquid solution or slurry and then dried. Common drying methods include drum drying, spray drying and vacuum drying. These processes allow the mixing of the ingredients and their binding together so that the finished powder mix is homogenous on the macro scale, at least, and is less likely to separate during distribution. There are several challenges associated with these processes, however, including:
   - When several immiscible materials are used in one mix such as mixes that contain fat soluble and water soluble ingredients, surfactant materials such as emulsifiers must be added to the liquid mix. When the liquid mix is then dried, the resulting powder resembles the distribution of the micelles in the liquid solution, to a certain extent, and the process merely "sticks" the different portions of the solution together without necessarily fusing them together or arranging them in a fashion that optimizes their solubility.
   - A second challenge arises when gelling and swelling ingredients such as hydrocolloids or starches are added into the mix. Because these drying processes are affected by viscosity, the rate at which these gelling ingredients are allowed to hydrate must be controlled tightly which, when combined with the fat/water post-drying arrangement described earlier, might affect their hydration rate in the finished product and their functionality
   - These processes are expensive requiring significant upfront investment in terms of dollars (ranging from 10's of thousands to millions) and in space and training in addition to significant ongoing cost of production. Traditionally these machines occupy large areas of the manufacturing facility and require dedicated infrastructure to operate and maintain them. These limitations have restricted the use of these methods to medium-large manufacturers which in turn has significantly restricted innovation in this area.
   - Products made by these processes are "locked" in that they are very difficult to customize. In order to customize these products, new liquid formulas must be developed which then need to be tested for their drying properties. Small scale rapid testing of new formulations is also difficult as the equipment and preparation required to run even pilot plant level batches is both time consuming and costly.

   The nature and cost of these equipment make scaling up operations or dispersing operations geographically (wither to reduce their carbon footprint or diffuse the technology) both difficult and expensive. These operations consume large amounts of energy and contribute to the pollution problem.
2) Dry Blending: in this process, the dry ingredients are all added together in a mixer that uses mechanical motion to mix the different components into a homogenous mixture. This process is considered one of the cheapest powder mix production methods but also has several challenges including:
   - Mixtures prepared by this method can easily separate during shipping and handling as the process does not include a "binding" step to fuse the ingredients together. Separation of the ingredients can cause significant challenges to their functionality and how they perform in the finished product especially when packed in multi-serving packs.
   - Because the ingredients are not bound together, their solubility during the rehydration step is limited to the native solubility of the components. In mixes containing water soluble and fat soluble components, separation in the finished product due to lack of proper emulsification might occur which would negatively impact quality and stability. Furthermore, because the ingredients are not fused together, special operations such as homogenization and aging must be employed to ensure proper distribution of fat around the air cells and the disruption of the fat chains which would otherwise give a filmy, oily, tongue-coating mouth feel especially in frozen desserts using vegetable fats instead of dairy fat.

In mixes containing hydrocolloids, failure to properly distribute the hydrocolloids in the mixture may result in lumps and poor hydration, both of which impact quality and stability negatively.

There are well known disadvantages of commercial ice cream set-ups:
- The typical ice cream plant is very expensive to set up and operate often involving several unit operations to receive and refrigerate incoming ingredients, blend ingredients, homogenize mixes, make the ice cream in machines, fill into cups and ultimately freeze;
- Because of the requirements described above, ice cream plants require a large footprint, consume allot of energy and require allot of sanitation;
- Ice creams produced in the traditional fashion require large, centralized manufacturing facilities that then ship their finished frozen products using expensive, energy intensive frozen shipping to distribution points and stores;
- Ice cream produced traditionally can also stay at the retailer for several months before being sold to the customer, during this time it continues to consume large amounts of energy in the frozen display case;
- Because of their requirements for energy and sanitation byproducts during their entire product cycle from farm to consumer, ice cream factories have a very large carbon foot print and contribute a great deal to pollution from their energy use and from handling their waste materials and the by-products of their handling and operations;

There are also well-known disadvantages of home ice cream machines such as:
- Its initial (purchase) and ongoing (electricity) cost, and limited availability.
- They are also single use machines and require a significant amount of use before they provide a positive return on investment when compared to buying pre-made ice cream at the store;
- All ice cream makers on the market by their nature can only produce 1 flavor at a time which when combined with the disadvantages listed below makes their use very limited and time consuming;
- Most ice cream machines require pre-freezing the freezing drum for up to 12 hours before use. - Those that don't require pre-freezing require cumbersome set-ups of ice and salt that are difficult and messy to set up or clean;
- Machines that don't require pre-freezing are expensive and can produce only small quantities of one flavor at a time with a minimum of 1-2 hours of time between batches;
- Due to their nature, these machines can't control the overrun value of the ice cream and can essentially produce only one overrun value thus limiting the range of products.

There are also disadvantages of home recipes:
- Most are time consuming, involve large amount of preparation time and many steps including cooking;
- All require the use of highly perishable, expensive and not always readily available (depending on geographic region) ingredients such as liquid cream, milk, sugar...etc;
- Most require several intermediate steps after mix prep and during the freezing process which means they need constant attention/attendance for several hours;
- Most cannot independently control overrun and total solids and produce only one flavor at a time.

The very few home processes that don't require cooking rely on ingredients with very high levels of sugar, fat and dissolved solids which significantly limits their ability to freeze under normal home refrigeration conditions and limits their use to very dense, very sweet, high fat, unstable desserts that will only partially freeze in even the most expensive of home cryo freezers. Due to the lack in balance of density of the components in these methods and the lack of emulsifiers and stabilizers, these products are not stable and often exhibit separation during either prep or storage. Prior art documents CN102669400, CN101406237, or US5456932 relate to a process for producing ice cream powder mixes.

### SUMMARY OF THE INVENTION:

The objectives of this invention are the following:
- to provide a new powder-mix preparation process;
- to develop a method to produce high solubility, easy to customize ice cream and frozen dairy and non-dairy dessert powder mixes that produce highly stable foams that don't create an oily mouth feel;
- to produce a, preferably shelf-stable, powdered ice cream mix (the mix not being part of the invention) that can be easily and quickly prepared, customized and frozen in the home or factory using standard home and factory appliances and freezers without the use of ice cream machines or elaborate ice cream manufacturing set-up.

The invention seeks to do this in a cheap, easy to set up and scale up processing method that increase innovation and competitiveness in the category by democratizing and decentralizing the process.

### BRIEF DESCRIPTION OF DRAWINGS:

FIG 1. Shows a microscopic view and diagram illustrating the different substances, air bubbles and fat globules in an ice cream. The picture originates from http://g4icecreamproject.blogspot.com
FIG 2. Is a diagram showing the fat structure in ice cream. The diagram was originally published in www.publications.parliament.uk 2015 sourced from Professor H. Douglas Goff-University of Guelph.

### DESCRIPTION OF SPECIFIC EMBODIMENTS:

This invention relates both to a new powder mix making process as defined in claims 1-3 and a process for making ice cream as defined in claim 4.

### 1) The powder mix making process:

The process described in this invention entails four steps set out in two stages; the first describes the creation of an "active" component and the second describes combining that active component with a "bulking" component.

### First stage: The active component.

The active component contains a purified, concentrated protein source (protein content 35-99% net protein content), an emulsifier (distilled monoglyceride), a stabilizer (hydrocolloid and or modified starch), salt and a carrier such as sucrose. The active component is made in the following steps:
Step 1: The dry ingredients are placed into a vertical grinder/blender with 4 horizontal blades in an "+" pattern. The powders are fed into the mixer perpendicular to the blades. The blades are sharpened on one edge and blunt on the other, the ingredients are simultaneously mixed and coarse-ground at low shear and low angle of shear. This steps breaks up clumps, homogenizes the mixture and begins to reduce the particle size of the ingredients
Step 2: The homogenized, free -flowing mixture is removed from the grinder/blender in the first step and placed in a high speed blender/grinder consisting of very sharp blades set at a high angle. As the blades turn, they significantly reduce the particle size of the mixture components including the hydrocolloids which are now finely ground and thoroughly dispersed among the other components of the mix. As the grinding/blending continues, the high shear rate and shear angle cause high friction with the particles of the mix and heat is generated. As the components begin to heat up while being sheared and blended, the distilled mono-glyceride (emulsifier) begins to melt and flow. As the process continues the emulsifier coats the other components thoroughly and fuses with them while binding all the ingredients of the active component together. At this point, the mixture goes from free flowing to the formation of powder sheets that breakup easily. At this point the product is removed from the high shear grinder/blender and allowed to cool.
   This coating step where the emulsifier coats and fuses to the proteins and the hydrocolloids is very important as it will later help the components of the active to more easily and quickly dissolve in liquid, allow the fat to better coat the air bubbles while simultaneously disrupting the fat chains to create stronger foams that don't leave a film, and allow the hydrocolloids to hydrate rapidly during the preparation of the finished dessert which will allow them to hold more air and resist separation. Because this is done without the direct application of heat, there is no damage to the taste or functionality of the active components.
Step 3: Next, the active mix is placed back in the low-medium speed low shear angle mixer which breaks up the sheets of powder into a free flowing, fine particle homogenous mixture once more

### Stage two: Combining the active component with a "bulking" component:

Step 4: The final mix: in this step, the bulking ingredients which can include sweeteners, fats, dairy powders are combined with the active component in the low shear angle mixer which works to combine the ingredients while reducing their size and providing enough friction and heat to fuse the fat-coated active to the rest of the bulking ingredients.

### 2) The formulation:

The formulation (not part of the invention) comprises a product made by the process described above. A typical formulation may comprise the following:
Sucrose: 12%
Powdered vegetable fat/dextrose mixture: 80%
Milk protein: 2.5%
Stabilizers (ex: guar, LBG, Taragacanth): 1.25%
Mono-glyceride emulsifier: 2%
Maltodextrine: 2.25%

A finished (not part of the invention) is made from the above-described mix. The product comes in a complete package and is completely water soluble at room temperature and below, the only thing the end user needs to add is water or liquid, such liquid preferably at a temperature comprised between 1 and 6 °C, then to whisk at high speed till the mixture more than doubles in volume. The mixture is then placed in the freezer and allowed to freeze till the desired hardness is achieved.

The semi-firm foam mixture created during preparation allows the addition of a number of variegates prior to freezing. The emulsification properties of the precisely rationed milk proteins, ionic gums and emulsifiers allow rapid, smooth mixing without the destruction of the foam or separation of the liquid phase during preparation, customization and freezing. The product is quickly prepared (less than 6 min) and requires only 2-3 simple steps with no need for pre-aging, cooking, ice cream machines or intermediate steps. The unfrozen product is stable at room temperature for longer than equivalent traditional ice cream mixes both commercial and home use. This stability allows for extended manipulation of the product prior to freezing including the ability to mold the product into shapes, which is not possible with any home or commercial ice cream mixes. The product is low cost compared to other ice cream/frozen dessert mixes on the market or pre-made ice cream. The product freezes readily in standard home freezers and requires no special treatment. The product is modular and enables the untrained end user to customize nearly all aspects of the product from overrun to texture, flavor, color, mouth feel and melting profile. The product produces a stable product that is stable to both freeze-thaw and temperature fluctuations even in home refrigerators.

By varying the protein source and or the fat source, the product nature can be quickly and completely transformed to create distinct products such dairy based traditional ice creams, vegetarian ice creams, vegan ice creams and several other varieties without having to change the manufacturing process or invest significant time and resources in recipe development. The heating-free "fusing" nature of the powder mixing process allows the mixture to be an effective carrier for other materials such as pharmaceutical compounds, and cosmetic supplements.

By conceptually deconstructing ice cream, stabilizing the components and reincorporating into stable, easily manipulated products, this invention seeks to present an alternative method to produce and distribute ice cream and related frozen desserts that would be dramatically cheaper and have a significantly lower environmental impact.

Main advantages of the powder production process of this invention include the following:
- the powder production process is cost effective with low upfront investment, low infrastructure investment, and easy scale up;
- low operator training needs and easy operation;
- increases the solubility of the mix;
- improves the hydration rate of the hydrocolloid portion of the mix;
- the mixing process allows for better fusion of emulsifier and protein molecule which improves the coating of air pockets in the ice cream with fat which improves the foam stability and its resistance to temperature shock, while simultaneously disrupting the fat chains in a way as to eliminate any oil mouth feel
- produces a more stable gel framework in the finished product and increases its stability;
- produces a mix that doesn't require ageing or pretreatment;
- produces a mix that can have overrun above 130% ;
- the process allows for the rapid development of viscosity in the finished product mixture and increased water-holding capacity without the use of food acids;
- creates a "platform" mix that can be easily and quickly customized to create distinct offerings such as vegan and non-dairy.

There are also several main advantages of the formulation and finished product including:
- Cost: due to the use of powdered ingredients that are shelf stable and don't require ice cream machines, this product is significantly cheaper in manufacturing, distribution and sale costs than traditional ice cream for both home or commercial use;
- Convenience: because the ingredients in the preferred execution are shelf stable and can be made in short time (<6 min) using common home utensils with no prior training, the product can be made at home when desired and in the quantities desired on short notice.
- Customization: the modular nature of the product and way this product is prepared allows the consumer to control both the total solids and the overrun of the finished product semi-independently thus enabling the creation of several different types of ice cream or frozen desserts which when coupled with the addition of colors and flavors to sub-batches during prep exponentially increase the number of customized products that can be produced in short time from the same unit of the product;
- Creativity: The modular nature of the product also allows the end user to creatively add ingredients to the product while giving them the ability to adjust for their effect on the finished product properties thus allowing the creation of highly customized desserts;
- Clean: The product takes out a great deal of energy and associated pollution from the ice cream production and distribution cycle by using a shelf stable dehydrated mix that requires far less energy to transport, store, distribute and prepare. The fact that the format shifts the freezing responsibility for the product from the commercial ice cream machines, hardening freezers, storage freezers, frozen transport trucks and frozen displays to the always on anyway home freezers in effect increases the energy cost efficiency of those freezers. The fact this product requires a relatively small manufacturing foot print can help revolutionize the manufacturing process by creating several small, local "prep" facilities in the target distribution area that can make the product on near-demand and reduce the costs for freezing, storage and distribution. Because the product is made at home, there is also a great deal of savings in terms of packaging and containers thus reducing landfill usage and non-biodegradable waste.

## Claims

1. A process for producing ice cream or dairy and non-dairy powder mix, the process comprising:
grinding and blending dried ingredients forming an active component, wherein the dried ingredients include a first mixture of a purified protein source having between 35-99% protein by weight, a monoglyceride emulsifier, a carrier and a stabilizer at low shear rate, said low shear rate defining a rate at which the monoglyceride emulsifier is not melted and flowed;
grinding and blending the active component at high shear rate, said high shear rate defining a rate at which the monoglyceride emulsifier is melted and flowed, for obtaining an active component shaped of powder sheets;
ambient cooling the active component;
mixing the active component at low shear rate for obtaining fine particle homogenous mixture; and
combining the active component with a bulking component, which includes sweeteners, fats or dairy powders, at low shear rate.

2. The process of claim 1, wherein the active component is combined with at least one of a powdered vegetable or animal based fat source, powdered sucrose, and powdered bulking agents.

3. The process of claim 1, wherein the stabilizer is a hydrocolloid which includes at least one of Locus bean gum, guar gum, and Tragacanth gum.

4. A process for making an ice cream, dairy or non-dairy frozen dessert product made using the powder mix of claim 1, the process comprising:
reconstituting the powder mix using a liquid at a temperature between 1 degree to 6 degrees Celsius;
mixing the liquid and the powder mix at high shear rate to create a foam with volume; and
freezing the said foam.

## Patentansprüche

1. Verfahren zur Herstellung von Eiscreme oder eines Pulvergemisches mit oder ohne Milch, wobei das Verfahren umfasst:
Mahlen und Vermischen getrockneter Inhaltsstoffe unter Bildung einer aktiven Komponente, worin die getrockneten Inhaltsstoffe ein erstes Gemisch einer gereinigten Proteinquelle mit einem Proteingehalt von zwischen 35-99 Gew.-% enthält, einen Monoglycerid-Emulgator, einen Träger und einen Stabilisator bei geringer Scherrate, worin die geringe Scherrate eine Rate definiert bei der der Monoglycerid-Emulgator nicht schmilzt oder fliesst;
Mahlen und Vermischen der aktiven Komponente bei hoher Scherrate, wobei die hohe Scherrate eine Rate definiert, bei der der Monoglycerid-Emulgator schmilzt oder fliesst, um eine aktive Komponente in Form von Pulverlagen zu erhalten;
Kühlen der aktiven Komponente bei Umgebungstemperatur;
Mischen der aktiven Komponente bei geringer Scherrate um ein homogenes Gemisch feiner Teilchen zu erhalten; und
Kombinieren der aktiven Komponente mit einer Auflockerungs-Komponente, welche Süßstoffe, Fette oder Milchpulver enthält, bei geringer Scherrate.

2. Verfahren nach Anspruch 1, wobei die aktive Komponente kombiniert wird mit mindestens einem von einem gepulverten Gemüse oder einer Quelle tierischen Fetts, Puderzucker und gepulverten Auflockerungsmitteln.

3. Verfahren nach Anspruch 1, wobei der Stabilisator ein Hydrokolloid ist, das mindestens eines umfasst von Locus Bean Gum, Guar Gum, und Tragacanth Gum.

4. Verfahren zur Herstellung eines gefrorenen Eiscreme-Dessert-Produkts mit oder ohne Milch unter Verwendung des Pulvergemisches von Anspruch 1, wobei das Verfahren umfasst:
Wiederherstellen des Pulvergemisches unter Verwendung einer Flüssigkeit bei einer Temperatur von zwischen 1 Grad bis 6 Grad Celsius;
Mischen der Flüssigkeit und des Pulvergemisches bei hoher Scherrate, um einen Schaum mit Volumen zu erzeugen;
und
Frieren des Schaums.

## Revendications

1. Procédé de production de mélange en poudre de crème glacée ou de produit laitier et non laitier, le procédé comprenant les étapes consistant à :
broyer et mélanger des ingrédients séchés formant un composant actif, dans lequel les ingrédients séchés comprennent un premier mélange d'une source de protéines purifiées ayant entre 35 et 99 % de protéines en poids, un émulsifiant monoglycéride, un support et un stabilisant à un faible taux de cisaillement, ledit faible taux de cisaillement définissant un taux auquel l'émulsifiant monoglycéride n'est pas fondu et amené à s'écouler ;
broyer et mélanger le composant actif à un taux de cisaillement élevé, ledit taux de cisaillement élevé définissant un taux auquel l'émulsifiant monoglycéride est fondu et amené à s'écouler, pour obtenir un composant actif sous la forme de feuillets de poudre ;
refroidir à température ambiante le composant actif ;
mélanger le composant actif à un faible taux vitesse de cisaillement pour obtenir un mélange homogène de particules fines ; et
associer le composant actif avec un agent de gonflement, qui inclut des édulcorants, des matières grasses ou des poudres de produits laitiers, à un faible taux de cisaillement.

2. Procédé selon la revendication 1, dans lequel le composant actif est associé avec au moins un ingrédient choisi parmi une source de matières grasses à base végétale ou animale en poudre, du saccharose en poudre et des agents de charge en poudre.

3. Procédé selon la revendication 1, dans lequel le stabilisant est un hydrocolloïde qui comprend au moins une gomme choisie parmi une gomme de caroube, une gomme de guar et une gomme de Tragacanthe.

4. Procédé de fabrication d'un produit de crème glacée, de dessert surgelé de produit laitier ou non-laitier fabriqué à l'aide du mélange en poudre selon la revendication 1, le procédé comprenant les étapes consistant à :
reconstituer le mélange en poudre à l'aide d'un liquide à une température comprise entre 1 degré et 6 degrés Celsius ;
mélanger le liquide et le mélange en poudre à un taux de cisaillement élevé pour créer une mousse ayant du volume ; et
congeler ladite mousse.
